# EUROPÄISCHE PATENTSCHRIFT

(11) **EP 2 002 504 B1**
(45) Veröffentlichungstag und Bekanntmachung des Hinweises auf die Patenterteilung: **13.06.2012**
(21) Anmeldenummer: 07727285.4
(22) Anmeldetag: 23.03.2007
(51) Int. Cl.: H01M 10/46, H01M 10/052

(54) **AUSTAUSCHBARE AKKUMULATOREINHEIT**
INTERCHANGEABLE ACCUMULATOR UNIT
ÉLÉMENT ACCUMULATEUR INTERCHANGEABLE

(30) Priorität: 24.03.2006 DE 102006014177
(43) Veröffentlichungstag der Anmeldung: 17.12.2008
(73) Patentinhaber: Sennheiser electronic GmbH & Co. KG, 30900 Wedemark (DE)
(72) Erfinder: ANDRES, Jörg, 31535 Neustadt (DE); REYMANN, Dirk, 29313 Hambühren (DE); MANN, Wolfgang, 30916 Isernhagen (DE)
(74) Vertreter: Gültzow, Marc
(86) Internationale Anmeldenummer: PCT/EP2007/052811
(87) Internationale Veröffentlichungsnummer: WO 2007/110390

(56) Entgegenhaltungen:
- WO-A-02/45236
- DE-A1-102004 008 569
- DE-U1- 29 610 085

## Beschreibung

Die vorliegende Erfindung betrifft eine austauschbare Akkumulatoreinheit, ein tragbares elektronisches Gerät und eine Ladestation.

Auswechselbare Akkumulatoreinheiten werden in allen gängigen tragbaren elektronischen Geräten wie beispielsweise Mobiltelefone, PDAs oder dergleichen verwendet. Durch ihre Austauschbarkeit ist gewährleistet, dass eine defekte Akkumulatoreinheit ersetzt werden kann.

DE 10 2004 008 569 A1 zeigt eine eigensichere Energiestromversorgung für den untertägigen Bergbau. Hierbei wird eine auswechselbare Akkumulatoreneinheit mit einem Gehäuse und einer Lithium-Akkuzelle gezeigt. In dem Gehäuse ist ferner eine Schutzschaltung sowie eine Ladeschaltung vorgesehen.

DE 298 17 827 U1 zeigt ein drahtloses Telefon mit einem Akku als Energieversorgung. Das Akku ist jedoch nicht austauschbar ausgestaltet.

DE 296 10 085 U1 zeigt eine Akkumulatoreneinheit mit einem Gehäuse und austauschbaren Akkumulatorzellen sowie mindestens einem Ladekontakt.

WO 2005/072548 A1 zeigt eine elektrisch beheizbare Einlegesohle. Die Einlegesohle weist dabei eine Heizelektrode und eine elektrisch damit verbundene aufladbare Batterie bzw. eine aufladbare Akkumulatorzelle auf. Hierbei ist die Akkumulatorzelle nicht austauschbar ausgestaltet.

Es ist Aufgabe der vorliegenden Erfindung, eine verbesserte austauschbare Akkumulatoreinheit und eine entsprechende Ladestation vorzusehen.

Diese Aufgabe wird durch eine austauschbare Akkumulatoreinheit gemäß dem Anspruch 1 und durch eine Ladestation gemäß Anspruch 8 gelöst.

Somit wird eine auswechselbare Akkumulatoreinheit mit einem Gehäuse und mindestens einer in dem Gehäuse angeordneten Lithium-Akkumulatorzelle vorgesehen. In dem Gehäuse der Akkumulatoreinheit ist ferner eine Ladeschaltung zum Steuern der Aufladung der Lithium-Akkumulatorzelle vorgesehen. An dem Gehäuse ist mindestens eine erste Ladekontakteinheit vorgesehen.

Gemäß einem Aspekt der vorliegenden Erfindung weist die Akkumulatoreinheit eine Ladekontakteinheit an der Unterseite des Gehäuses und/oder an einer Stirnseite des Gehäuses auf. Somit werden zwei Ladekontakteinheiten vorgesehen, so dass die Akkumulatoreinheit in unterschiedlichen Anordnungen aufgeladen werden kann.

Gemäß einem bevorzugten Aspekt der vorliegenden Erfindung weist die Ladekontakteinheit einen Massekontakt, einen positiven Anschluss zum Anschließen der Ladespannung, einen positiven Anschluss zum Vorsehen einer Versorgungsspannung der Akkumulatorzelle und einen Statuskontakt auf. Der positive Anschluss für die Ladespannung wird an die Ladeschaltung angelegt. Über den positiven Anschluss der Akkumulatoreinheit kann die Akkumulatoreinheit zur Spannungsversorgung verwendet werden.

Die vorliegende Erfindung betrifft ebenfalls ein tragbares elektronisches Gerät, welches eine austauschbare Akkumulatoreinheit aufweist.

Die Erfindung betrifft ebenfalls eine Ladestation für eine Akkumulatoreinheit. Die Ladestation weist einen ersten Schacht zur Aufnahme einer Akkumulatoreinheit auf. Die Ladestation weist ferner eine Lademulde zur Aufnahme eines tragbaren elektronischen Gerätes mit einer Akkumulatoreinheit und zur Aufladung der sich darin befindlichen austauschbaren Akkumulatoreinheit auf.

Weitere Ausgestaltungen der Erfindung sind Gegenstand der Unteransprüche.

Die Ausführungsbeispiele und Vorteile der vorliegenden Erfindung werden nachstehend unter Bezugnahme auf die beigefügten Zeichnungen näher erläutert.
- Fig. 1: zeigt eine Seitenansicht einer Akkumulatoreinheit gemäß einem ersten Ausführungsbeispiel,
- Fig. 2: zeigt eine Draufsicht auf die Akkumulatoreinheit von Fig. 1,
- Fig. 3: zeigt eine Ansicht der Unterseite der Akkumulatoreinheit von Fig. 1,
- Fig. 4: zeigt eine weitere Ansicht der Akkumulatoreinheit von Fig. 1,
- Fig. 5: zeigt eine schematische Ansicht der elektrischen Komponenten der Akkumulatoreinheit von Fig. 1,
- Fig. 6: zeigt eine schematische Darstellung der Akkumulatoreinheit von Fig. 1,
- Fig. 7: zeigt eine perspektivische Ansicht einer Ladestation gemäß einem zweiten Ausführungsbeispiel,
- Fig. 8: zeigt eine weitere perspektivische Ansicht der Ladestation von Fig. 7,
- Fig. 9: zeigt eine perspektivische Ansicht eines elektronischen Gerätes gemäß einem dritten Ausführungsbeispiel, und
- Fig. 10: zeigt eine vergrößerte Ansicht des elektronischen Gerätes von Fig. 9.

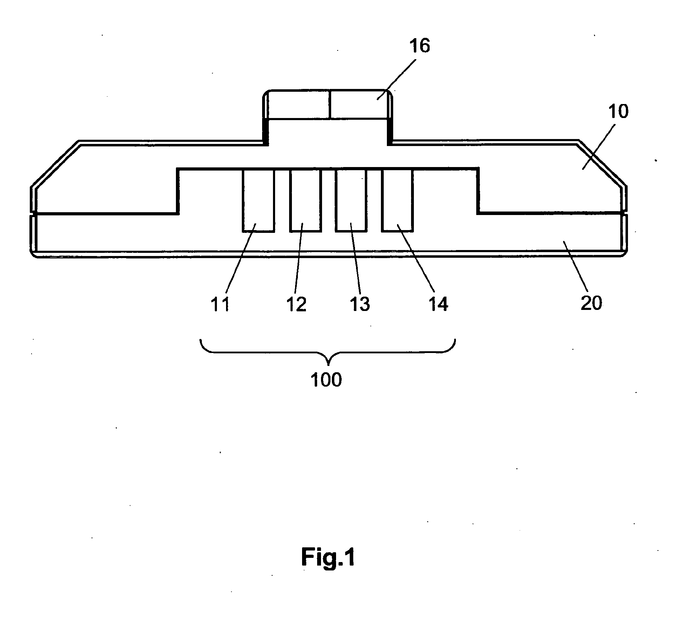

Fig. 1 zeigt eine seitliche Ansicht der Akkumulatoreinheit gemäß einem ersten Ausführungsbeispiel. Die Akkumulatoreinheit weist ein oberes Gehäuseteil 10 und ein unteres Gehäuseteil 20 auf. An dem unteren Gehäuseteil 20 ist eine erste Ladekontakteinheit 100 mit vier Ladekontakten 11, 12, 13 und 14 angeordnet. Die Kontakttiefe der Ladekontakte 11 bis 14 beträgt zwischen 0,1mm und 1 mm, vorzugsweise 0,5 mm.

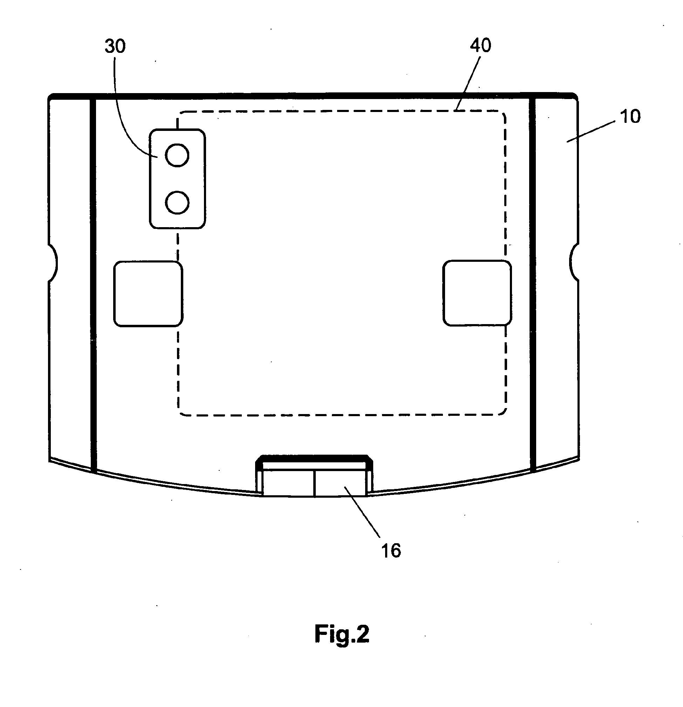

Fig. 2 zeigt eine Ansicht auf eine Akkumulatoreinheit gemäß dem ersten Ausführungsbeispiel von Fig. 1. Hier ist insbesondere eine Draufsicht auf das obere Gehäuseteil 10 der Akkumulatoreinheit gezeigt. Auf dem oberen Gehäuseteil 10 ist ein Testpunktlabel 30 sowie ein Vorsprung 16 angeordnet.

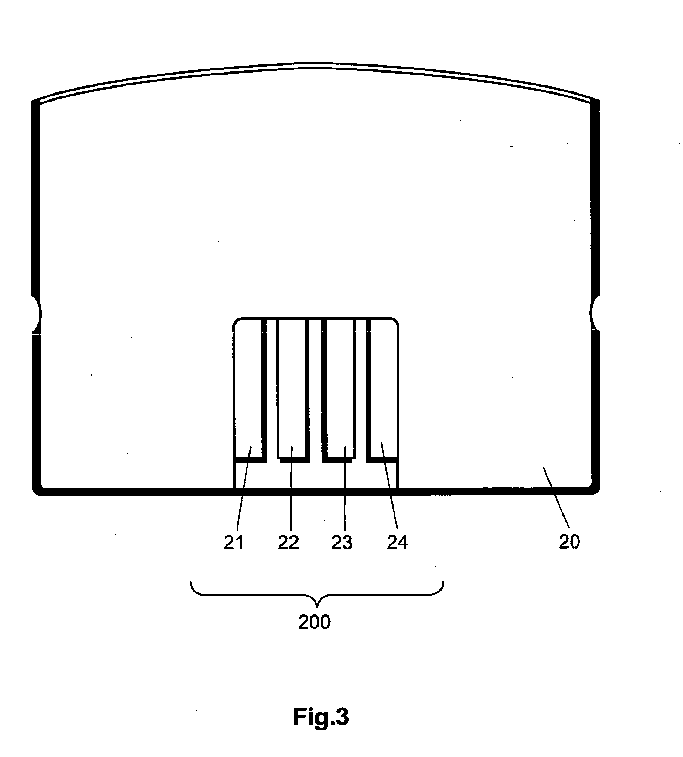

Fig. 3 zeigt eine weitere Ansicht der Akkumulatoreinheit von Fig. 1. Hier ist eine Ansicht des unteren Gehäuseteils 20 gezeigt. In dem unteren Gehäuseteil 20 ist eine zweite Ladekontakteinheit 200 mit vier Ladekontakten 21, 22, 23 und 24 angeordnet. Diese Ladekontakte 21 bis 24 sind jeweils mit den Ladekontakten 11 bis 14 gekoppelt.

Das obere Gehäuseteil 10 und das untere Gehäuseteil 20 umschließen eine Lithium-Polymerakkuzelle 40. Das Gehäuse bestehend aus dem Oberteil 10 und dem Unterteil 20 weist zwei unterschiedliche Kontaktierungsebenen bzw. eine erste und zweite Ladekontakteinhit 100, 200 auf. Die eine Kontaktierungsebene befindet sich an der Unterseite, d. h. im unteren Gehäuseteil 20, wobei sich die zweite Kontaktierungsebene an der Rückseite bzw. einer Stirnseite der Akkumulatoreinheit. Durch die Ausgestaltung der zwei Ladekontakteinheiten 100, 200 bzw. Ladekontaktierungsebenen kann die Akkumulatoreinheit sowohl als ein Einzelakku in einem Ladefach als auch alternativ bzw. zusätzlich dazu in einem tragbaren elektronischen Gerät in einem Ladeschacht bzw. einer Lademulde entsprechend geladen werden.

Die Akkumulatorzelle 40 weist eine Schutzschaltung gegen Kurzschluss und gegen eine zu hohe Spannung auf. Optional dazu kann eine Schutzschaltung gegen eine zu hohe Umgebungstemperatur ebenfalls in der Akkumulatoreinheit vorgesehen werden.

In oder auf der Akkumulatorzelle wird eine Ladeschaltung vorgesehen, welche den Aufladeprozess der Akkumulatorzelle steuert. Diese Ladeschaltung kann eine Rückmeldung über den aktuellen Ladezustand der Akkumulatorzelle abgeben. Die Ladekontaktflächen an der Unterseite 20 und an der Rückseite weisen jeweils vier Ladekontaktflächen auf. Diese vier Ladekontaktflächen stellen Erde (Masse), + für die Ladespannung (die Spannung, welche an die Ladeschaltung angelegt wird), + für die Akkumulatorzelle (als Spannungsversorgung) und einen Statuskontakt dar. Über den Statuskontakt 12 kann eine Anzeige in der Ladestation angesteuert werden, um anzuzeigen, ob geladen wird oder ob die Akkumulatorzelle fertig aufgeladen ist. Alternativ bzw. zusätzlich dazu kann die Akkumulatoreinheit eine Anzeigeneinheit aufweisen, über die eine Restkapazität der Akkumulatorzelle angezeigt werden kann. Dies kann beispielsweise mittels einer Zeitanzeige, einer prozentualen Anzeige oder einer LED-Kette erfolgen.

Durch das Vorsehen der Ladeschaltung innerhalb des Gehäuses der Akkumulatoreinheit befindet sich die gesamte Ladeintelligenz in der Akkumulatoreinheit, so dass eine entsprechende Ladestation lediglich eine stabilisierte Spannung von beispielsweise 5 Volt erzeugen muss.

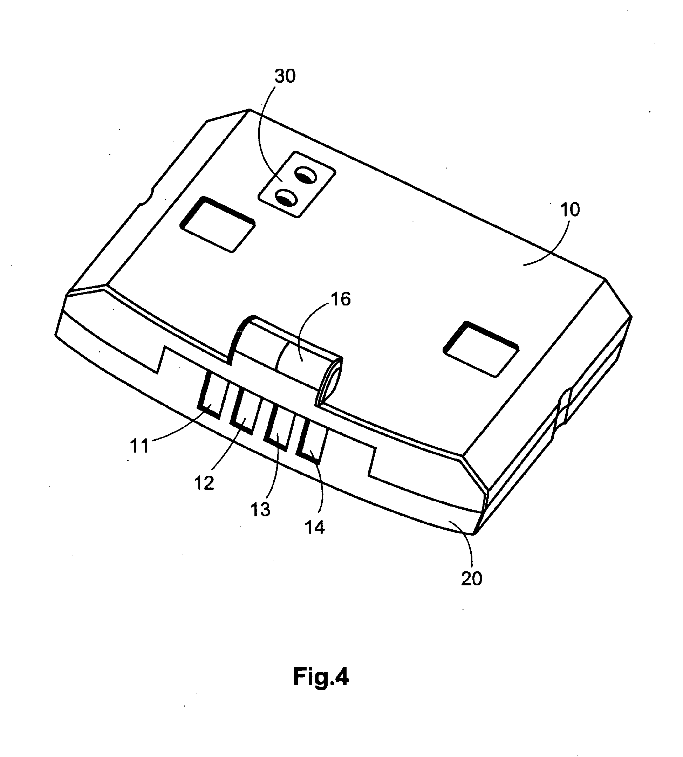

Fig. 4 zeigt eine perspektivische Ansicht der Akkumulatoreinheit von Fig. 1. Hier sind sowohl das obere als auch das untere Gehäuseteil 10, 20 als auch die erste Ladekontakteinheit 100 mit den vier Ladekontaktflächen 11-14 gezeigt.

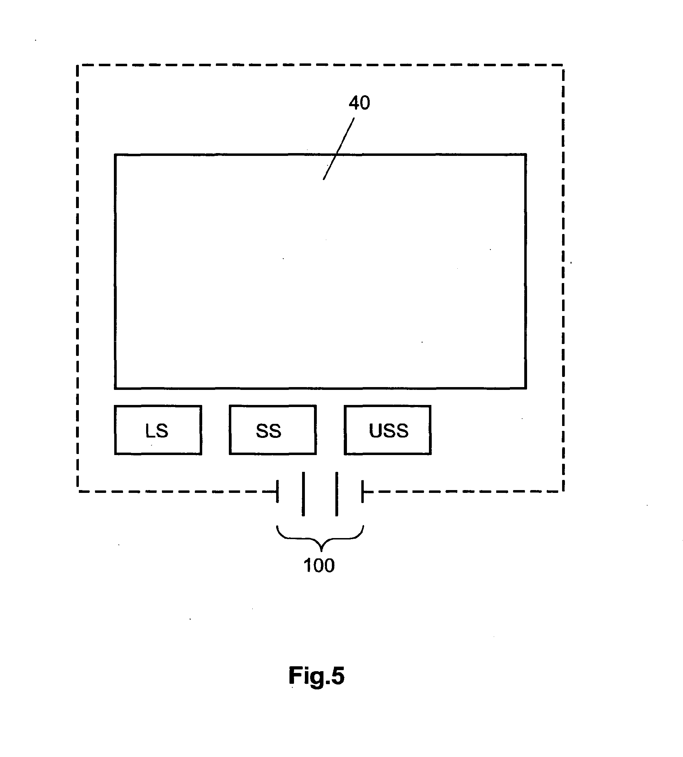

Fig. 5 zeigt eine schematische Ansicht der elektrischen Komponenten der Akkumulatoreinheit von Fig. 1. Die Akkumulatorzelle 40 weist eine Lithium-Polymerzelle LI auf. In oder an der Lithium-Polymerzelle ist eine Ladeschaltung LS, eine Schutzschaltung SS und optional eine Umgebungstemperatur-Schutzschaltung USS angeordnet. Die Ladekontakteinheit 11-14 mit den vier Ladekontakten ist entsprechend mit der Polymerzelle 40 verbunden. Hierbei sind zwei unterschiedliche Ladekontakteinheiten an verschiedenen Gehäuseebenen angeordnet. Die beiden Ladekontakteinheiten sind jedoch elektrisch miteinander verbunden, so dass eine Aufladung der Akkumulatorzelle 40 über jede der Ladekontakteinheiten erfolgen kann.

Die Ladeschaltung LS ist beispielsweise als ein Ladecontroller zur Überwachung der Aufladung der Lithium-Polymerakkuzelle implementiert. Die Aufladung erfolgt hierbei zunächst vorzugsweise über einen konstanten Strom und anschließend über eine konstante Spannung. Vorzugsweise ist neben der Akkuzelle bzw. den Akkuzellen eine Leiterplatte angeordnet, welche sowohl die Ladeschaltung LS als auch die Schutzschaltung SS aufweist. Die Schutzschaltung SS weist eine Überwachungselektronik gegen einen Kurzschlussstrom und gegen eine Übe r-spannung auf. Durch die Implementierung der Ladeschaltung bzw. des Ladecontrollers in dem Gehäuse der Akkumulatoreinheit benötigt die Akkumulatoreinheit zur Aufladung lediglich eine konstante Spannung von 5 Volt. Die restliche Steuerung der Aufladung erfolgt durch die Ladeschaltung LS. Die Ladekontakteinheit 100 weist vier Ladekontaktflächen auf. Neben einer Kontaktfläche für die Masse ist ein Plus-Anschluss vorhanden, welcher direkt von der Akkumulatorzelle zu dem tragbaren elektronischen Gerät führt, um somit eine Energieversorgung des Gerätes sicherzustellen (+ für die Akkumulatorzelle). Zusätzlich dazu ist eine weitere Kontaktfläche vorgesehen, welche mit der Ladeschaltung LS gekoppelt ist. Diese Spannung weist typischerweise 5 Volt auf und stellt die Eingangsspannung für die Ladeschaltung LS dar. Aus dieser Eingangsspannung von ca. 5 Volt erzeugt die Ladeschaltung LS den konstanten Ladestrom und die konstante Ladespannung, mittels welcher die Akkumulatorzellen aufgeladen werden. Wie bereits oben angeführt, ist eine Kontaktfläche für die positive Spannung der Akkumulatorzelle vorgesehen, mittels welcher das tragbare elektronische Gerät mit Energie versorgt wird, so dass die Akkumulatoreinheit als Spannungsquelle verwendet wird. Der Statuskontakt ist mit der Ladeschaltung LS gekoppelt, welche entweder auf Plus oder auf Masse geschaltet wird. Diese Information ist über den Statuskontakt abfragbar. Diese beiden Betriebszustände (+ bzw. Versorgungsspannung und Masse) werden zum einen einem Ladezustand und zum anderen einem fertig aufgeladenen Zustand zugeordnet. Über den Statuskontakt kann die Information, ob die Akkumulatorzelle aufgeladen wird oder bereits aufgeladen ist, weitergegeben werden, so dass dies entsprechend in einer oder an einer Ladestation gezeigt werden kann.

Die Ladekontaktflächen sind sowohl an der Stirnseite als auch an der unteren Seite der Akkumulatoreinheit vorgesehen. Dabei sind die Ladekontakte vorzugsweise als ein Formblechteil ausgestaltet, welches zwei unterschiedliche Kontaktebenen (Stirnseite, Unterseite) der Akkumulatoreinheit vorsieht. Somit kann die Akkumulatoreinheit sowohl von ihrer Stirnseite her als auch von ihrer Unterseite her aufgeladen werden.

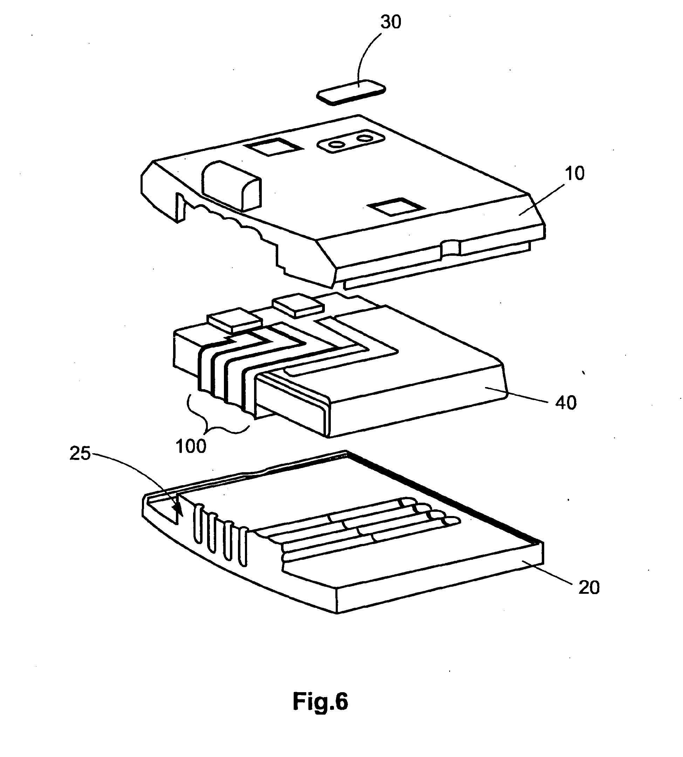

Fig. 6 zeigt eine schematische Ansicht der Akkumulatoreinheit von Fig. 1. Dabei ist insbesondere das obere Gehäuseteil 10, die Akkumulatorzelle 40 und das untere Gehäuseteil 20 gezeigt. An der Rückseite weist das untere Gehäuseteil 20 mehrere Vorsprünge auf, in welche die erste Ladekontakteinheit derart eingeführt werden kann, dass die unterschiedlichen Ladekontaktflächen zwischen den Vorsprüngen 25 platziert werden. In dem unteren Gehäuseteil 20 sind in dem Boden weitere Ausnehmungen vorgesehen, so dass eine Kontaktierung der Ladekontaktflächen auch an der Unterseite des Gehäuses möglich ist.

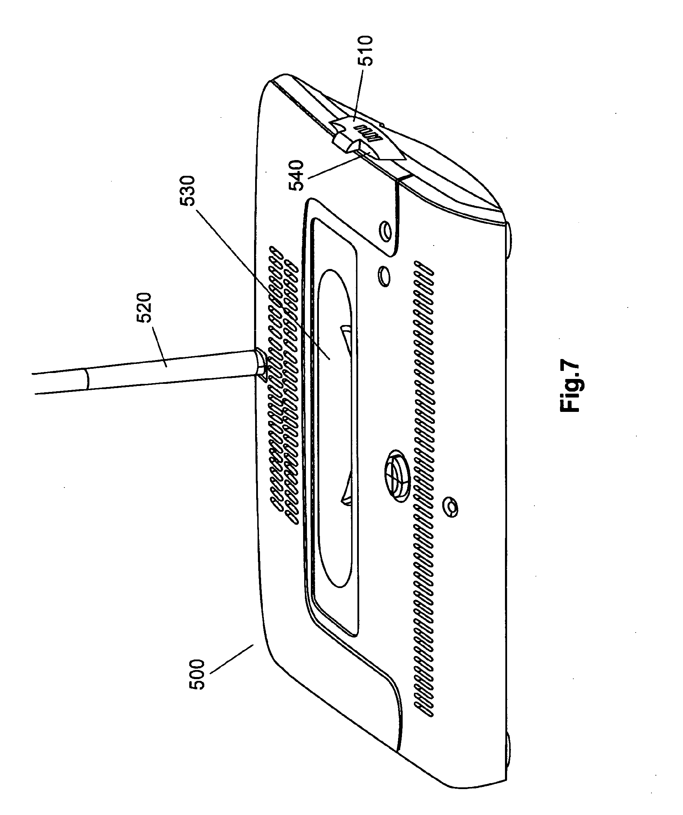

Fig. 7 zeigt eine perspektivische Ansicht einer Ladestation gemäß einem zweiten Ausführungsbeispiel. Die Ladestation wird vorzugsweise in einem Gehäuse 500 einer Sendeeinheit zum drahtlosen Senden an eine tragbare elektronische Empfangseinheit vorgesehen. In dem Gehäuse 500 ist ein Ladeschacht 540 für die austauschbaren Akkumulatoreneinheiten 510 gemäß dem ersten Ausführungsbeispiel vorgesehen. Dieser Ladeschacht ist vorzugsweise an einer Seitenfläche des Gehäuses 500 angeordnet. Auf der Oberseite des Gehäuses 500 ist vorzugsweise eine Lademulde 530 angeordnet, auf welcher ein tragbares elektronisches Empfangsgerät platziert werden kann, um eine sich darin befindliche austauschbare Akkumulatoreneinheit aufzuladen.

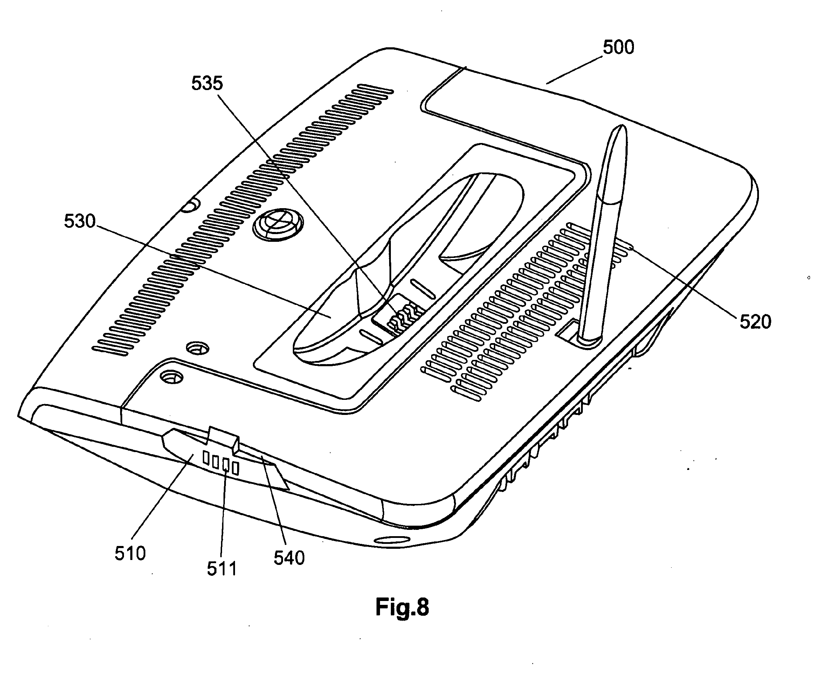

Fig. 8 zeigt eine weitere perspektivische Ansicht der Ladestation von Fig. 7. In der Lademulde 530 sind elektrische Kontakte 535 vorgesehen, welche mit den Kontaktflächen von austauschbaren Akkumulatoreneinheiten in einem tragbaren elektronischen Gerät derart zusammenwirken können, dass die austauschbare Akkumulatoreinheit aufgeladen wird. An der Seite des Gehäuses 500 ist der Ladeschacht 540 vorgesehen, in welchem eine austauschbare Akkumulatoreinheit gemäß dem ersten Ausführungsbeispiel platziert werden kann, um somit aufgeladen zu werden. In Fig. 8 sind die Ladekontaktflächen 511 an der Stirnseite der austauschbaren Akkumulatoreinheit gezeigt. Wenn die austauschbare Akkumulatoreinheit 510 in den Ladeschacht 540 eingeführt wird, so erfolgt eine Aufladung dieser Akkumulatoreinheit über die sich an der Unterseite befindlichen Ladekontakte, wie sie gemäß dem ersten Ausführungsbeispiel beschrieben worden sind. Demzufolge sind in dem Ladeschacht 540 elektrische Kontakte 545 vorgesehen, welche mit den Ladekontaktflächen an der Unterseite der Akkumulatoreinheit zusammenwirken. Der Ladeschacht 540 ist dabei vorzugsweise derart ausgestaltet, dass die austauschbaren Akkumulatoreinheiten gemäß Fig. 1, d. h. gemäß den Figuren 1 bis 6, nur mit dem Vorsprung 16 nach oben weisend eingeführt werden können, so dass sichergestellt ist, dass die austauschbare Akkumulatoreinheit immer richtig herum eingeführt wird.

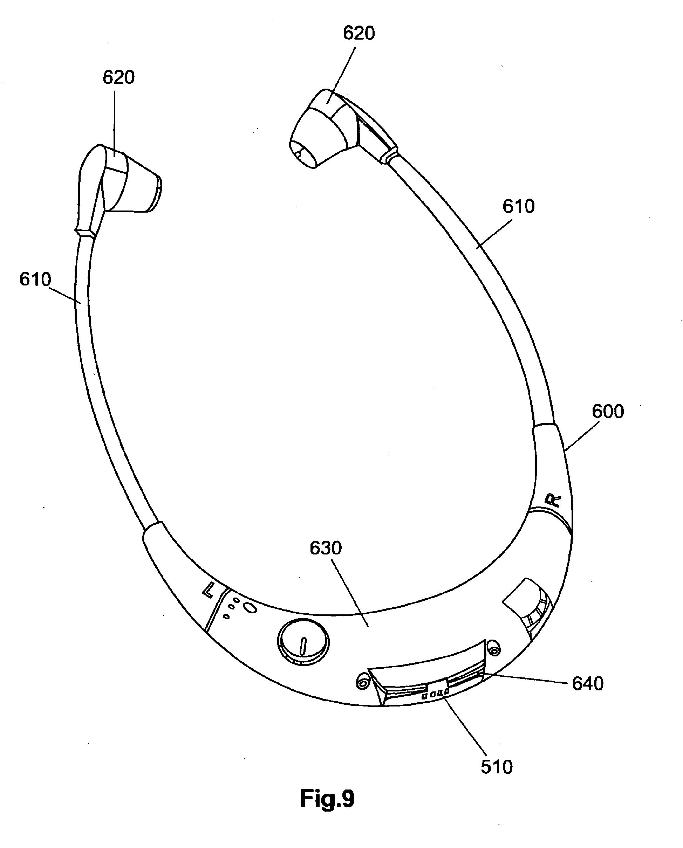

Fig. 9 zeigt eine perspektivische Ansicht einer tragbaren elektronischen Empfangseinheit gemäß einem dritten Ausführungsbeispiel. Die tragbare elektron i-sche Empfangseinheit weist ein Gehäuse 630 sowie zwei Stethoset-Arme 610 jeweils mit einem elektroakustischen Wandler 620 an deren Ende auf. An der Unterseite des Gehäuses 630 ist ein Schacht 640 vorgesehen, in welchen die austauschbare Akkumulatoreinheit 510 eingeführt werden kann, um die Energieversorgung für das drahtlose tragbare Empfangsgerät vorzusehen. In dem Schacht 640 sind elektrische Kontakte vorgesehen, welche mit den Ladekontaktflächen der austauschbaren Akkumulatoreinheit zusammenwirken können, so dass die Akkumulatoreinheit als Spannungsversorgung verwendet werden kann.

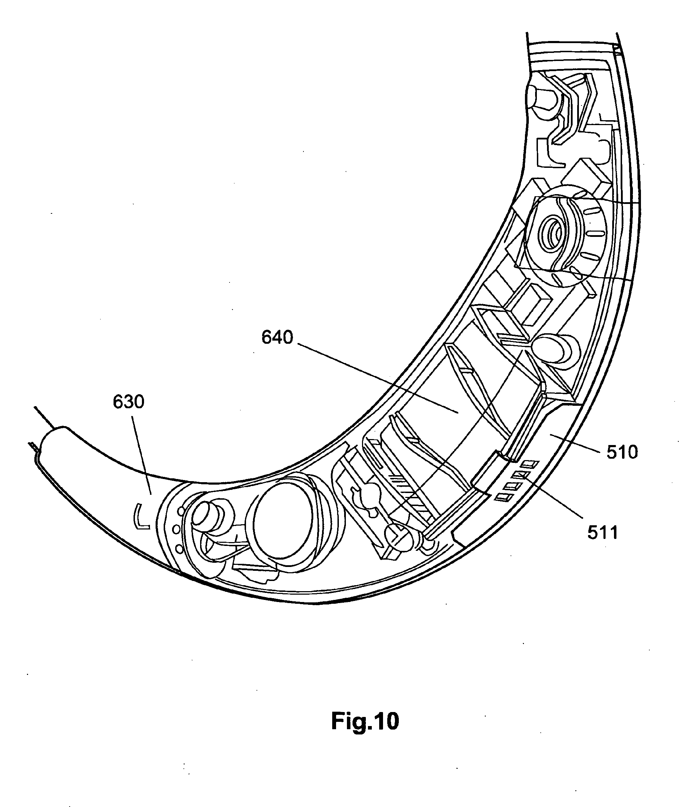

Fig. 10 zeigt eine weitere perspektivische Ansicht eines Abschnitts der tragbaren Empfangseinheit von Fig. 9. Auch hierbei ist die austauschbare Akkumulatoreinheit in dem Schacht 640 vorgesehen und dient als Spannungsversorgung für die tragbare elektronische Empfangseinheit.

Die tragbare elektronische Empfangseinheit gemäß Fig. 9 und 10 kann in die Lademulde 530 gemäß den Fig. 7 und 8 platziert werden, um die austauschbare Akkumulatoreinheit aufzuladen. In einem derartigen Fall kommen die elektrischen Kontakte 535 mit den elektrischen Kontaktflächen 511 in Berührung, so dass die austauschbare Akkumulatoreinheit in der tragbaren elektronischen Empfangseinheit über die Ladekontaktflächen an ihrer Stirnseite aufgeladen wird.

## Patentansprüche

1. Austauschbare Akkumulatoreinheit, mit
einem Gehäuse (10, 20) und mindestens einer in dem Gehäuse angeordneten Lithiumakkumulatorzelle (40) und einer in dem Gehäuse angeordneten Ladeschaltungseinheit (50) zum Steuern der Aufladung der Lithiumakkumulatorzelle (40), **dadurch gekennzeichnet, dass** das Gehäuse eine erste Ladekontakteinheit (100, 200) an der Unterseite des Gehäuses (20, 10) und eine zweite Ladekontakteinheit (200) an einer Stimseite des Gehäuses (20, 10) aufweist,
wobei die erste und zweite Ladekontakteinheit (100, 200) elektrisch miteinander verbunden sind, so dass eine Aufladung der Akkumulatorzelle über jede der Ladekontakteinheiten erfolgen kann.

2. Akkumulatoreinheit nach Anspruch 1, wobei die Ladekontakteinheit (100, 200) vier Ladekontaktflächen (11-14; 21-24) aufweist.

3. Akkumulatoreinheit nach einem der Ansprüche 1 oder 2, wobei die erste Ladekontaktfläche als Massekontaktierung, die zweite Ladekontaktfläche einen positiven Anschluss zum Anschließen der Ladespannung, der dritte Ladekontakt einen positiven Anschluss zum Vorsehen einer Versorgungsspannung für die Akkumulatorzelle und der vierte Ladekontakt einen Statuskontakt darstellt.

4. Akkumulatoreinheit nach einem der Ansprüche 1 bis 3, wobei eine Anzeigeneinheit zum Anzeigen einer Restkapazität in dem Gehäuse angeordnet ist.

5. Akkumulatoreinheit nach einem der Ansprüche 1 bis 4, wobei die Ladeschaltungseiriheit (50) als ein Ladecontroller zur Überwachung der Aufladung der Lithiumakkumulatorzelle (40) ausgestaltet ist, wobei die Ladeschaltungseinheit dazu ausgebildet ist, die Aufladung derart zu steuern, dass zunächst ein konstanter Strom und anschließend eine konstante Spannung der Lithiumakkumulatorzelle (40) zugeführt wird.

6. Tragbares elektronisches Gerät mit einer austauschbaren Akkumulatoreinheit gemäß einem der Ansprüche 1 bis 5.

## Claims

1. A replaceable battery unit, comprising
a housing (10, 20) and at least one lithium battery cell (40), disposed in the housing, and a charging circuit unit (50), disposed in the housing, for controlling the charging of the lithium battery cell (40), **characterised in that** the housing has a first charging contact unit (100, 200) on the underside of the housing (20, 10) and a second charging contact unit (200) on a front side of the housing (20, 10),
the first and second charging contact unit (100, 200) being electrically connected to each other, so that charging of the battery cell can take place via each of the charging contact units.

2. A battery unit according to claim 1, wherein the charging contact unit (100, 200) has four charging contact surfaces (11-14; 21-24).

3. A battery unit according to either of claims 1 and 2, wherein the first charging contact surface as earth contacting, the second charging contact surface constitutes a positive connection for connecting the charging voltage, the third charging contact constitutes a positive connection for providing a supply voltage for the battery cell and the fourth charging contact constitutes a status contact.

4. A battery unit according to any one of claims 1 to 3, wherein a display unit for displaying a residual capacity is disposed in the housing.

5. A battery unit according to any one of claims 1 to 4, wherein the charging circuit unit (50) is configured as a charging controller for monitoring the charging of the lithium battery cell (40), wherein the charging circuit unit is designed to control the charging in such a manner that first a constant current is supplied to the lithium battery cell (40) and then a constant voltage is supplied to the lithium battery cell (40).

6. A portable electronic device having a replaceable battery unit according to any one of claims 1 to 5.

## Revendications

1. Unité d'accumulateur interchangeable, comportant
un boîtier (10, 20) et au moins une cellule d'accumulateur au lithium (40) disposée dans le boîtier et une unité de circuit de chargement (50) disposée dans le boîtier servant commander le chargement de la cellule d'accumulateur au lithium (40), **caractérisée en ce que** le boîtier présente une première unité de contact de charge (100, 200) au niveau de la partie inférieure du boîtier (20, 10) et une deuxième unité de contact de charge (200) au niveau de la partie frontale du boîtier (20, 10),
dans laquelle la première et la deuxième unités de contact de charge (100, 200) sont reliées l'une à l'autre de manière électrique de telle sorte qu'un chargement de la cellule d'accumulateur peut avoir lieu par l'intermédiaire de chacune des unités de contact de charge.

2. Unité d'accumulateur selon la revendication 1, dans laquelle l'unité de contact de charge (100, 200) présente quatre surfaces de contact de charge (11-14 ; 21-24).

3. Unité d'accumulateur selon l'une quelconque des revendications 1 ou 2, dans laquelle la première surface de contact de charge sert de connexion de masse, la deuxième surface de contact de charge sert de raccordement positif servant à raccorder la tension de charge, le troisième contact de charge sert de raccordement positif servant à prévoir une tension d'alimentation pour la cellule d'accumulateur et le quatrième contact de charge sert de contact d'état.

4. Unité d'accumulateur selon l'une quelconque des revendications 1 à 3, dans laquelle une unité d'affichage servant à afficher une capacité résiduelle est disposée dans le boîtier.

5. Unité d'accumulateur selon l'une quelconque des revendications 1 à 4, dans laquelle l'unité de circuit de chargement (50) est configurée comme un régulateur de charge servant à surveiller le chargement de la cellule d'accumulateur au lithium (40), dans laquelle l'unité de circuit de chargement est réalisée pour commander le chargement de telle manière que, dans un premier temps un courant constant puis une tension constante sont amenés à la cellule d'accumulateur au lithium (40).

6. Appareil électronique portatif comportant une unité d'accumulateur interchangeable selon l'une quelconque des revendications 1 à 5.
